# EUROPÄISCHE PATENTANMELDUNG

(11) **EP 4 324 701 A1**
(43) Veröffentlichungstag der Anmeldung: **21.02.2024**
(21) Anmeldenummer: 23192294.9
(22) Anmeldetag: 19.08.2023
(51) Int. Cl.: B60Q 3/43, B60Q 3/49, B60Q 3/51, B60Q 3/78, B60P 3/34, B60P 3/36

(54) **FREIZEITFAHRZEUG MIT EINER BELEUCHTUNGSEINRICHTUNG**

(30) Priorität: 19.08.2022 DE 102022121085
(71) Anmelder: Hymer GmbH & Co. KG, 88339 Bad Waldsee (DE)
(72) Erfinder: SCHULZ, Bastian, 88364 Wolfegg (DE)
(74) Vertreter: Müller Schupfner & Partner Patent- und Rechtsanwaltspartnerschaft mbB

(57) **Zusammenfassung**

Beleuchtungseinrichtung (1) für ein Freizeitfahrzeug (2), insbesondere ein Wohnmobil oder einen Wohnwagen, weiter insbesondere für ein Hubdach (3) eines Freizeitfahrzeugs (2), mit zumindest einem Leuchtmittel (4). Vorgeschlagen wird, dass das zumindest eine Leuchtmittel (4) als LED-Band ausgestaltet ist, dass zumindest ein zumindest im Wesentlichen transparenter Schlauch (6) vorgesehen ist, dass der Schlauch (6) zumindest eine sich entlang einer Erstreckung (7) des Schlauches (6) erstreckende Leuchtmittelaufnahme (8) aufweist und dass das Leuchtmittel (4) in der Leuchtmittelaufnahme (8) des Schlauches (6) angeordnet ist. Ferner ist ein Freizeitfahrzeug (2) mit solch einer Beleuchtungseinrichtung (1) angegeben.

## Beschreibung

Die Erfindung betrifft ein Freizeitfahrzeug mit einer Beleuchtungseinrichtung, insbesondere einer Beleuchtungseinrichtung für ein Hubdach des Freizeitfahrzeugs. Insbesondere betrifft die Erfindung das Gebiet der Freizeitfahrzeuge, die als Wohnmobil oder Wohnwagen ausgestaltet sind.

Aus der EP 1 149 733 A2 ist eine Leuchte für ein Wohnmobil bekannt. Die bekannte Leuchte weist ein langgestrecktes Leuchtengehäuse mit einem darin angeordneten Leuchtmittel auf. Eine Leuchtenabdeckung ist teilweise lichtdurchlässig.

Aufgabe der Erfindung ist es, eine Beleuchtungseinrichtung für ein Freizeitfahrzeug, insbesondere für ein Wohnmobil oder einen Wohnwagen, ein Hubdach mit einer Beleuchtungseinrichtung und ein Freizeitfahrzeug anzugeben, die eine verbesserte Ausgestaltung und Funktionsweise ermöglichen.

Die Aufgabe wird durch eine Beleuchtungseinrichtung mit den Merkmalen des unabhängigen Patentanspruchs 1, durch ein Hubdach mit den Merkmalen des Patentanspruchs 10 und durch ein Freizeitfahrzeug mit den Merkmalen des Patentanspruchs 12 gelöst. Vorteilhafte Weiterbildung der Erfindung sind in den Unteransprüchen angegeben.

Die Aufgabe wird durch eine Beleuchtungseinrichtung für ein Freizeitfahrzeug, insbesondere ein Wohnmobil oder einen Wohnwagen, weiter insbesondere für ein Hubdach eines Freizeitfahrzeugs, mit zumindest einem Leuchtmittel gelöst, wobei das zumindest eine Leuchtmittel als LED-Band ausgestaltet ist, wobei zumindest ein zumindest im Wesentlichen transparenter Schlauch vorgesehen ist, wobei der Schlauch zumindest eine sich entlang einer Erstreckung des Schlauches erstreckende Leuchtmittelaufnahme aufweist und wobei das Leuchtmittel in der Leuchtmittelaufnahme des Schlauches angeordnet ist.

Ferner wird die Aufgabe durch ein Hubdach für ein Freizeitfahrzeug, insbesondere ein Wohnmobil oder einen Wohnwagen, mit zumindest einer solchen Beleuchtungseinrichtung gelöst.

Außerdem wird die Aufgabe durch ein Freizeitfahrzeug, insbesondere ein Wohnmobil oder einen Wohnwagen, mit zumindest einer solchen Beleuchtungseinrichtung und/oder einem solchen Hubdach gelöst.

Vorteilhaft ist es, dass das Leuchtmittel so in der Leuchtmittelaufnahme des Schlauches angeordnet ist, dass sich das Leuchtmittel zumindest über zumindest einen wesentlichen Teil des Schlauches, insbesondere zumindest im Wesentlichen über die gesamte Erstreckung des Schlauches, erstreckt. Dadurch kann der Schlauch im Betrieb insbesondere über die in einem Aufenthaltsraum, insbesondere einem Schlafraum eines Hubdachs, sichtbare Länge leuchten. Vorzugsweise ist der Schlauch zumindest im Wesentlichen in dem Aufenthaltsraum angeordnet, so dass eine Lichtabgabe über die gesamte Länge des Schlauches vorteilhaft ist.

Vorteilhaft ist es, dass an der Leuchtmittelaufnahme ein Diffusor vorgesehen ist und dass im Betrieb ein von dem LED-Band erzeugtes Licht zumindest teilweise durch den Diffusor an der Leuchtmittelaufnahme in den Schlauch geführt ist. Hierdurch kann eine gleichmäßige oder vergleichmäßigte Lichtabgabe erfolgen. Vorzugsweise erfolgt hierbei eine gleichmäßige Lichtabgabe über die Erstreckung beziehungsweise Länge des Schlauches. Bei einer abgewandelten Ausgestaltung können auch Unterbrechungen in dem LED-Band vorgesehen sein. In beiden Fällen kann dann eine Vergleichmäßigung der Lichtabgabe erfolgen, so dass beispielsweise eher punkt- oder linienförmige Lichtquellen des LED-Bandes nicht wahrnehmbar sind. Dies ermöglicht eine angenehme Wohnraumbeleuchtung.

Vorteilhaft ist es, dass der Diffusor an einer Grenzfläche zwischen der Leuchtmittelaufnahme und dem Schlauch ausgestaltet ist, wobei der Diffusor durch eine nicht ebene Geometrie, insbesondere eine zackenförmige Geometrie, der Grenzfläche ausgestaltet ist. Hierdurch kann der Schlauch die Funktionsweise des Diffusors realisieren, so dass sich die Anzahle der Bauteile und gegebenenfalls auch die Herstellungskosten verringern.

Vorteilhaft ist es, dass der Schlauch zumindest eine Diffusorausnehmung aufweist, die sich entlang des Schlauches über zumindest einen wesentlichen Teil des Schlauches, insbesondere zumindest im Wesentlichen über die gesamte Erstreckung des Schlauches, erstreckt und dass an der Diffusorausnehmung ein Diffusor vorgesehen ist. Hierdurch kann die Diffusionswirkung des Schlauches erheblich gesteigert werden. Dies ermöglicht insbesondere bei einem im Vergleich zu den Dimensionen der Lichtquellen im LED-Band großen Querschnitt des Schlauchs ein homogenisierte Lichtabstrahlung. Hierdurch kann auch der subjektive optische Eindruck vermittelt werden, dass der Schlauch gleichmäßig leuchtet.

Vorteilhaft ist es, dass der Diffusor an einer Grenzfläche zwischen der Diffusorausnehmung und dem Schlauch ausgestaltet ist, wobei der Diffusor durch eine nicht ebene Geometrie, insbesondere eine zackenförmige Geometrie, der Grenzfläche ausgestaltet ist. Hierdurch ist eine vorteilhafte Realisierung angegeben.

Vorteilhaft ist es, dass dass die Diffusorausnehmung als Hohlraum ausgestaltet ist. Dadurch ist eine gleichmäßige Außenkontur des Schlauchs realisierbar. Außerdem ist der Diffusor dadurch geschützt, insbesondere vor Verschmutzung geschützt, angeordnet. Ferner kann die wirksame Diffusorfläche enstprechend einer großen Grenzfläche optimal groß realisiert werden.

Vorteilhaft ist es, dass der Schlauch zumindest eine sich über zumindest einen wesentlichen Teil des Schlauches, insbesondere zumindest im Wesentlichen über die gesamte Erstreckung des Schlauches, erstreckende Aussparung aufweist, die als Hohlraum ausgebildet ist. Vorzugsweise ist hierbei eine symmetrische Anordnung solcher Aussparungen im Querschnitt realisiert. Dadurch kann eine Flexibilität des Schlauches wesentlich verbessert werden.

Vorteilhaft ist es, dass der Schlauch ein Leuchtteil mit einem zumindest näherungsweise ovalen, insbesondere zumindest näherungsweise elliptischen, weiter insbesondere zumindest näherungsweise kreisförmigen, Querschnitt und ein Befestigungsteil aufweist, das vorzugsweise einen zumindest näherungsweise rechteckigen Querschnitt aufweist. Hierdurch sind einerseits eine gleichmäßige Lichtabgabe und eine formschöne Ausgestaltung realisierbar. Andererseits ist eine zuverlässige und platzsparende Ausgestaltung zur Befestigung realisierbar.

Speziell bei einem Hubdach ist es vorteilhaft, dass eine Dachschale vorgesehen ist und dass zumindest eine Beleuchtungseinrichtung zumindest mittelbar mit der Dachschale verbunden ist, wobei vorzugsweise ein Befestigungsteil des Schlauches mit einem zumindest näherungsweise rechteckigen Querschnitt zumindest mittelbar mit der Dachschale verbunden ist und/oder vorzugsweise ein Leuchtteil des Schlauches mit einem zumindest näherungsweise ovalen, insbesondere zumindest näherungsweise elliptischen, weiter insbesondere zumindest näherungsweise kreisförmigen, Querschnitt frei angeordnet ist. Dadurch kann die Beleuchtungseinrichtung als Gestaltungselement im Aufenthaltsraum beziehungsweise Hubdach dienen.

Weitere Vorteile und Einzelheiten der Erfindung werden anhand der in den schematischen Figuren dargestellten Ausführungsbeispiele näher erläutert. Hierbei zeigen:
- Fig. 1: eine Beleuchtungseinrichtung mit einem Schlauch für ein Hubdach eines Freizeitfahrzeugs entsprechend einem Ausführungsbeispiel in einer schematischen Schnittdarstellung, wobei ein Querschnitt des Schlauches dargestellt ist;
- Fig. 2: eine Dachschale eines Hubdachs eines Freizeitfahrzeugs mit einer Beleuchtungseinrichtung entsprechend dem Ausführungsbeispiel in einer auszugsweisen, schematischen Darstellung, wobei eine Ansicht des Hubdachs von schräg unten dargestellt ist;
- Fig. 3: eine Beleuchtungseinrichtung entsprechend dem Ausführungsbeispiel in einer schematischen, räumlichen Darstellung vor einer Montage, wobei außerdem eine schematische Verbindung mit einer Steuereinrichtung dargestellt ist;
- Fig. 4: einen Aufenthaltsraum, insbesondere Schlafraum, eines Hubdachs eines Freizeitfahrzeugs entsprechend dem Ausführungsbeispiel in einer auszugsweisen, schematischen Darstellung, wobei ein Innenraum des Hubdachs gezeigt ist; und
- Fig. 5: einen Aufenthaltsraum, insbesondere Schlafraum, eines Hubdachs eines Freizeitfahrzeugs entsprechend einer abgewandelten Ausgestaltung des Ausführungsbeispiels in einer auszugsweisen, schematischen Darstellung, wobei ein Innenraum des Hubdachs gezeigt ist.

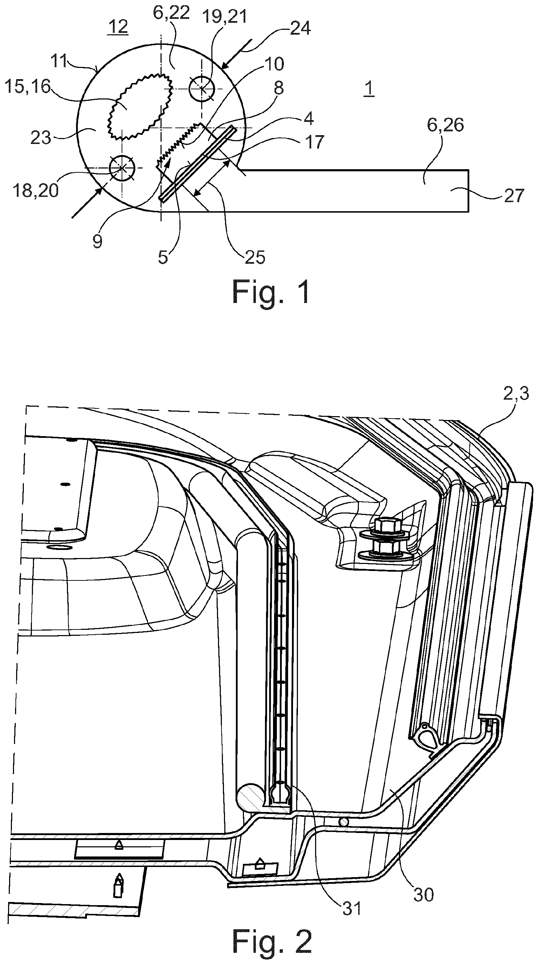

Fig. 1 zeigt eine Beleuchtungseinrichtung 1 für ein Freizeitfahrzeug 2 (Fig. 2 bis 4) entsprechend einem Ausführungsbeispiel in einer schematischen Schnittdarstellung im Querschnitt. Die Beleuchtungseinrichtung 1 eignet sich besonders für ein Hubdach 3 (Fig. 2 bis 4) des Freizeitfahrzeugs 2. Das Freizeitfahrzeug 1 kann insbesondere als Wohnmobil oder Wohnwagen ausgestaltet sein. Die Beleuchtungseinrichtung 1 eignet sich insbesondere für solche Freizeitfahrzeuge 2.

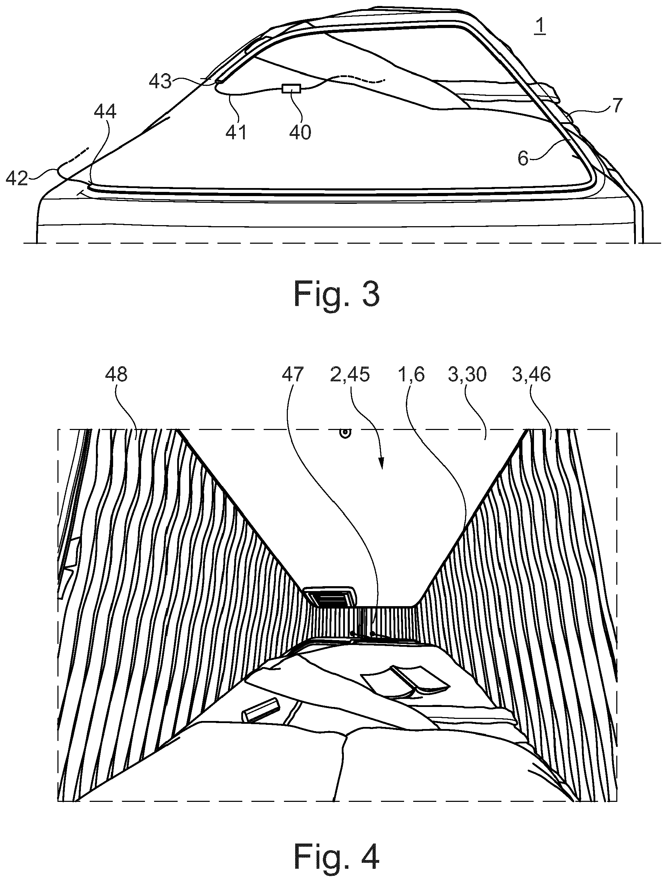

Die Beleuchtungseinrichtung 1 weist ein Leuchtmittel 4 auf, das als LED-Band ausgestaltet ist. Hierbei emitiert das LED-Band zumindest an einer Seite 5 sichtbares Licht. Zur Aufnahme des Leuchtmittels 4 dient ein transparenter Schlauch 6 der Beleuchtungseinrichtung 1, wobei das LED-Band in eine sich entlang einer Erstreckung 7 (Fig. 3) des Schlauches 6 erstreckende Leuchtmittelaufnahme 8 eingefügt ist.

Das Leuchtmittel 4, das in der Leuchtmittelaufnahme 8 des Schlauches 6 angeordnet ist, emitiert im Betrieb Licht, das zunächst durch das Material des Schlauches hindurch tritt, bevor es durch Austreten an einer Oberfläche 11 des Schlauches 6 an eine Umgebung 12 abgegeben wird. Insbesondere ist an der Leuchtmittelaufnahme 8 ein Diffusor 9 vorgesehen. Im Betrieb wird ein von dem LED-Band erzeugtes Licht durch den Diffusor 9 an der Leuchtmittelaufnahme 8 in den Schlauch 6 geführt.

Der Diffusor 9 ist an einer Grenzfläche 10 zwischen der Leuchtmittelaufnahme 8 und dem Schlauch 6 ausgestaltet. Der Diffusor 9 zeichnet sich durch eine nicht ebene Geometrie der Grenzfläche 10 aus, die in diesem Ausführungsbeispiel durch eine zackenförmige Geometrie der Grenzfläche 10 realisiert ist. Dadurch wird das Licht des LED-Bandes durch Brechung an der lokal unterschiedlich geneigten Grenzfläche 10 homogenisiert.

Um die Homogenisierung des Lichtes zu verbessern beziehungsweise die Diffusionswirkung weiter zu steigern, weist der Schlauch 6 in diesem Ausführungsbeispiel außerdem eine weitere Diffusorausnehmung 15 auf. Bei einer abgewandelten Ausgestaltung können auch mehrere und gegebenenfalls kleiner ausgestalte weitere Diffusorausnehmungen 15 vorgesehen sein. Die Diffusorausnehmung erstreckt sich in diesem Ausführungsbeispiel über die gesamte Erstreckung 7 des Schlauches 6.

An der Diffusorausnehmung 15 ist ein weiterer Diffusor 9 vorgesehen. Der Diffusor 9 ist an einer Grenzfläche 10 zwischen der Diffusorausnehmung 15 und dem Schlauch 6 ausgestaltet. Der Diffusor 9 ist durch eine nicht ebene Geometrie der Grenzfläche 10 gebildet, die in diesem Ausführungsbeispiel als zackenförmige Geometrie der Grenzfläche 10 realisiert ist. Ferner ist die Diffusorausnehmung 15 als Hohlraum 16 ausgestaltet.

Der Schlauch 6 ist als flexibler Schlauch 6 ausgebildet. Insbesondere kann der Werkstoff des Schlauches 6 auf einem Silikon basieren. Der Schlauch 6 kann speziell als Silikonschlauch 6 ausgebildet sein. Um die Flexibilität des Schlauches 6 weiter zu verbessern, sind in dem Schlauch 6 Aussparungen 18, 19 ausgebildet, die sich in diesem Ausführungsbeispiel über die gesamte Erstreckung 7 des Schlauches 6, erstrecken. Die Aussparungen 18, 19 sind als Hohlräume 20, 21 ausgebildet.

Im folgenden wird die Ausgestaltung der Beleuchtungseinrichtung 1 auch unter Bezugnahme auf Fig. 2 weiter beschrieben. Fig. 2 zeigt eine Dachschale 30 eines Hubdachs 3 eines Freizeitfahrzeugs 2 mit einer Beleuchtungseinrichtung 1 entsprechend dem Ausführungsbeispiel in einer auszugsweisen, schematischen Darstellung, wobei eine Ansicht des Hubdachs 3 von schräg unten dargestellt ist.

Der Schlauch 6 weist ein Leuchtteil 22 mit einem kreisförmigen Querschnitt 23 auf. Ein Durchmesser 24 des Querschnitts 23 ist deutlich größer als eine Breite 25 einer aktiven Emisionsfläche 17 des Leuchtmittels 4, an der Licht emitiert wird. Durch die Duffusoren 9, 15 wird dennoch eine homogene Lichtabstrahlung an der Oberfläche 11 erreicht. Bei abgewandelten Ausgestaltungen kann der Querschnitt 23 auch beliebig oval, insbesondere elliptisch, ausgestaltet sein.

Ferner weist der Schlauch 6 ein Befestigungsteil 26 aufweist, das einen rechteckigen Querschnitt 27 aufweist. Das Befestigungsteil 26 kann insbesondere als Befestigungsfahne 26 ausgebildet sein. Mittels eines Dachelements 31 kann der Schlauch 6 an dem Befestigungsteil 26 mit der Dachschale 30 verbunden sein.

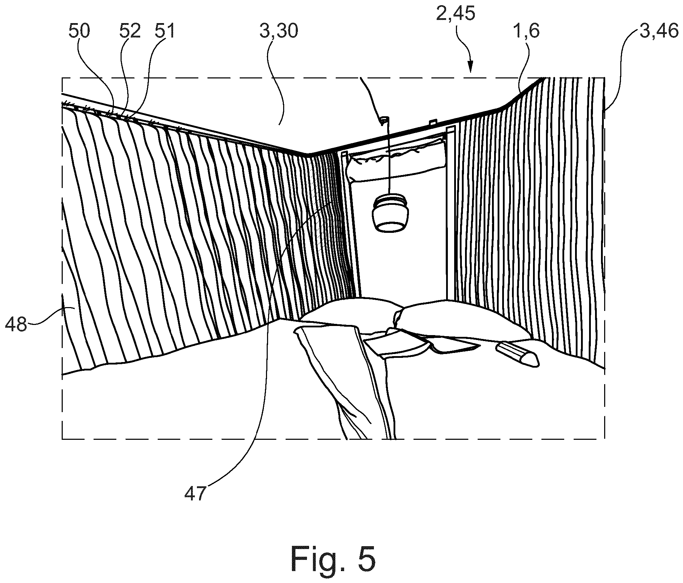

Fig. 3 zeigt eine Beleuchtungseinrichtung 1 entsprechend dem Ausführungsbeispiel in einer schematischen, räumlichen Darstellung vor einer Montage, wobei außerdem eine schematische Verbindung mit einer Steuereinrichtung 40 dargestellt ist. Die elektrischen Leitungen 41, 42 für das LED-Band sind an den Enden 43, 44 mit dem LED-Band verbunden und aus dem elastischen Schlauch 6 geführt. Die Leitung 43 ist mit der Steuereinrichtung 40 verbunden. Beispielsweise kann ein Benutzer über die Steuereinrichtung 40 die Leuchtwirkung einstellen. Hierbei ist auch eine Fernbedienung möglich. Die Steuereinrichtung 40 kann auch ein Umschalten zwischen Betriebsarten, insbesondere zwischen den anhand Fig. 4 und 5 beschriebenen Betriebsarten ermöglichen, wobei eine selektive Ansteuerung von Gruppen von Elementen des LED-Bandes realisiert ist.

Das Leuchtmittel 4 ist in diesem Ausführungsbeispiel so in der Leuchtmittelaufnahme 8 des Schlauches 6 angeordnet, dass sich das Leuchtmittel 4 über die gesamte Erstreckung 7 des Schlauches 6 erstreckt. Das Leuchtmittel 4 kann sich aber auch nur über einen wesentlichen Teil des Schlauches 6, der beispielsweise zur Beleuchtung genutzt werden soll, erstrecken.

Fig. 4 zeigt einen Aufenthaltsraum 45, insbesondere Schlafraum, eines Hubdachs 3 eines Freizeitfahrzeugs 2 entsprechend dem Ausführungsbeispiel in einer auszugsweisen, schematischen Darstellung, wobei ein Innenraum 45 des Hubdachs 3 gezeigt ist. Die Dachschale 30 ist mit Seitenteilen 46, 47, 48 des Hubdachs 3 verbunden, wobei zur Vereinfachung der Darstellung nur die Seitenteile 46, 47, 48 gekennzeichnet sind. Dadurch ist der Aufenthaltsraum 45 umschlossen. Der Schlauch 6 ist im Bereich zwischen der Dachschale 30 und den Seitenteilen 46, 47, 48 angeordnet. In diesem Ausführungsbeispiel ist die Leuchtwirkung entlang der Erstreckung 7 des Schlauches homogen.

Fig. 5 zeigt einen Aufenthaltsraum 35, insbesondere Schlafraum, eines Hubdachs 3 eines Freizeitfahrzeugs 2 entsprechend einer abgewandelten Ausgestaltung des Ausführungsbeispiels in einer auszugsweisen, schematischen Darstellung, wobei ein Innenraum des Hubdachs 3 gezeigt ist. Im Unterschied zu der in Fig. 4 gezeigten Ausgestaltung ist die Leuchtwirkung entlang der Erstreckung 7 des Schlauches so ausgeführt, dass homogene und vorzugsweise kugel- oder zylinderförmige Leuchtbereiche 50, 51 von Bereichen 52 mit deutlicher geringerer oder zumindest näherungsweise verschwindender wahrnehmbarer Leuchtwirkung unterbrochen sind, wobei zur Vereinfachung der Darstellung nur die Leuchtbereiche 50, 51 und der Bereich 52 gekennzeichnet sind.

Die Erfindung ist nicht auf die beschriebenen Ausführungsformen beschränkt.

## Patentansprüche

1. Beleuchtungseinrichtung (1) für ein Freizeitfahrzeug (2), insbesondere ein Wohnmobil oder einen Wohnwagen, weiter insbesondere für ein Hubdach (3) eines Freizeitfahrzeugs (2), mit zumindest einem Leuchtmittel (4),
**dadurch gekennzeichnet,**
**dass** das zumindest eine Leuchtmittel (4) als LED-Band ausgestaltet ist, dass zumindest ein zumindest im Wesentlichen transparenter Schlauch (6) vorgesehen ist, dass der Schlauch (6) zumindest eine sich entlang einer Erstreckung (7) des Schlauches (6) erstreckende Leuchtmittelaufnahme (8) aufweist und dass das Leuchtmittel (4) in der Leuchtmittelaufnahme (8) des Schlauches (6) angeordnet ist.

2. Beleuchtungseinrichtung nach Anspruch 1,
**dadurch gekennzeichnet,**
**dass** das Leuchtmittel (4) so in der Leuchtmittelaufnahme (8) des Schlauches (6) angeordnet ist, dass sich das Leuchtmittel (4) zumindest über zumindest einen wesentlichen Teil des Schlauches (6), insbesondere zumindest im Wesentlichen über die gesamte Erstreckung (7) des Schlauches (6), erstreckt.

3. Beleuchtungseinrichtung nach Anspruch 1 oder 2,
**dadurch gekennzeichnet,**
**dass** an der Leuchtmittelaufnahme (8) ein Diffusor (9) vorgesehen ist und dass im Betrieb ein von dem LED-Band erzeugtes Licht zumindest teilweise durch den Diffusor (9) an der Leuchtmittelaufnahme (8) in den Schlauch (6) geführt ist.

4. Beleuchtungseinrichtung nach Anspruch 3,
**dadurch gekennzeichnet,**
**dass** der Diffusor (9) an einer Grenzfläche (10) zwischen der Leuchtmittelaufnahme (8) und dem Schlauch (6) ausgestaltet ist, wobei der Diffusor (9) durch eine nicht ebene Geometrie, insbesondere eine zackenförmige Geometrie, der Grenzfläche (10) ausgestaltet ist.

5. Beleuchtungseinrichtung nach einem der Ansprüche 1 bis 4,
**dadurch gekennzeichnet,**
**dass** der Schlauch (6) zumindest eine Diffusorausnehmung (15) aufweist, die sich entlang des Schlauches (6) über zumindest einen wesentlichen Teil des Schlauches (6), insbesondere zumindest im Wesentlichen über die gesamte Erstreckung (7) des Schlauches (6), erstreckt und dass an der Diffusorausnehmung (15) ein Diffusor (9) vorgesehen ist.

6. Beleuchtungseinrichtung nach Anspruch 5,
**dadurch gekennzeichnet,**
**dass** der Diffusor (9) an einer Grenzfläche (10) zwischen der Diffusorausnehmung (15) und dem Schlauch (6) ausgestaltet ist, wobei der Diffusor (9) durch eine nicht ebene Geometrie, insbesondere eine zackenförmige Geometrie, der Grenzfläche (10) ausgestaltet ist.

7. Beleuchtungseinrichtung nach Anspruch 4 oder 5,
**dadurch gekennzeichnet,**
**dass** dass die Diffusorausnehmung (15) als Hohlraum (16) ausgestaltet ist.

8. Beleuchtungseinrichtung nach einem der Ansprüche 1 bis 7,
**dadurch gekennzeichnet,**
**dass** der Schlauch (6) zumindest eine sich über zumindest einen wesentlichen Teil des Schlauches (6), insbesondere zumindest im Wesentlichen über die gesamte Erstreckung (7) des Schlauches (6), erstreckende Aussparung (18, 19) aufweist, die als Hohlraum (20, 21) ausgebildet ist.

9. Beleuchtungseinrichtung nach einem der Ansprüche 1 bis 8,
**dadurch gekennzeichnet,**
**dass** der Schlauch (6) ein Leuchtteil (22) mit einem zumindest näherungsweise ovalen, insbesondere zumindest näherungsweise elliptischen, weiter insbesondere zumindest näherungsweise kreisförmigen, Querschnitt (23) und ein Befestigungsteil (26) aufweist, das vorzugsweise einen zumindest näherungsweise rechteckigen Querschnitt (27) aufweist.

10. Hubdach (3) für ein Freizeitfahrzeug (2), insbesondere Wohnmobil oder Wohnwagen, mit zumindest einer Beleuchtungseinrichtung (1) nach einem der Ansprüche 1 bis 9.

11. Hubdach nach Anspruch 10,
**dadurch gekennzeichnet,**
**dass** eine Dachschale (30) vorgesehen ist und dass zumindest eine Beleuchtungseinrichtung (1) zumindest mittelbar mit der Dachschale (30) verbunden ist, wobei vorzugsweise ein Befestigungsteil (26) des Schlauches mit einem zumindest näherungsweise rechteckigen Querschnitt (27) zumindest mittelbar mit der Dachschale (30) verbunden ist und/oder vorzugsweise ein Leuchtteil (22) des Schlauches (6) mit einem zumindest näherungsweise ovalen, insbesondere zumindest näherungsweise elliptischen, weiter insbesondere zumindest näherungsweise kreisförmigen, Querschnitt (23) frei angeordnet ist.

12. Freizeitfahrzeug (2), insbesondere Wohnmobil oder Wohnwagen, mit zumindest einer Beleuchtungseinrichtung (1) nach einem der Ansprüche 1 bis 9 und/oder einem Hubdach (3) nach Anspruch 10 oder 11.
